# EUROPÄISCHE PATENTSCHRIFT

(11) **EP 4 127 524 B1**
(45) Veröffentlichungstag und Bekanntmachung des Hinweises auf die Patenterteilung: **29.05.2024**
(21) Anmeldenummer: 21712804.0
(22) Anmeldetag: 16.03.2021
(51) Int. Cl.: F16H 63/48, F16H 61/12, F16H 63/34, F16H 59/44

(54) **VERFAHREN ZUM BETREIBEN EINER PARKSPERRENEINRICHTUNG IN EINEM FAHRZEUG UND PARKSPERRENEINRICHTUNG FÜR EIN FAHRZEUG**
METHOD FOR OPERATING A PARK LOCK DEVICE IN A VEHICLE, AND PARK LOCK DEVICE FOR A VEHICLE
PROCÉDÉ PERMETTANT DE FAIRE FONCTIONNER UN DISPOSITIF DE VERROUILLAGE DE STATIONNEMENT DANS UN VÉHICULE, AINSI QUE DISPOSITIF DE VERROUILLAGE DE STATIONNEMENT POUR UN VÉHICULE

(30) Priorität: 02.04.2020 DE 102020204296
(43) Veröffentlichungstag der Anmeldung: 08.02.2023
(73) Patentinhaber: Robert Bosch GmbH, 70442 Stuttgart (DE)
(72) Erfinder: BAST, Frank, 71732 Tamm (DE)
(86) Internationale Anmeldenummer: PCT/EP2021/056665
(87) Internationale Veröffentlichungsnummer: WO 2021/197834

(56) Entgegenhaltungen:
- DE-A1- 19 753 680
- DE-A1-102012 217 704
- DE-A1-102014 019 489

## Beschreibung

Die vorliegende Erfindung betrifft ein Verfahren zum Betreiben einer Parksperreneinrichtung in einem Fahrzeug und eine Parksperreneinrichtung für ein Fahrzeug.

### Stand der Technik

Bei Triebsträngen in Kraftfahrzeugen ist die Maschine, beispielsweise die elektrische Maschine, mit den Antriebsrädern des Fahrzeuges gekoppelt und das Getriebe kann mittels einer Parksperre blockiert werden um das Fahrzeug an einem unbeabsichtigten Wegrollen zu hindern. Die Sperre kann dabei schaltbar sein und mit dem Getriebe formschlüssig sein. Derartige Sperrmechanismen können so ausgeführt sein, dass eine Verstellbewegung zum Einlegen der Sperre nicht direkt zu einem Blockieren der Getriebewelle führen muss, vielmehr kann diese derart ausgelegt sein (eine Abweisfunktion aufweisen), dass ein Blockieren oberhalb einer vorbestimmten Drehzahlgrenze vermieden werden kann. Zu diesem Zweck kann der formschlüssige Sperrmechanismus eine aufeinander abgestimmte Geometrie zwischen den rotierenden und feststehenden Teilen aufweisen.

In der DE 10 2018 200 092 A1 wird ein Verfahren zum Steuern eines Fahrzeugs mit einer Parksperre beschrieben.

Aus der DE 10 2014 019489 A1, auf welchem die zweiteilige Anspruchsfassung basiert, ist ein Verfahren zum Betrieben einer Parksperreneinrichtung bekannt.

### Offenbarung der Erfindung

Die vorliegende Erfindung schafft ein Verfahren zum Betreiben einer Parksperreneinrichtung in einem Fahrzeug nach Anspruch 1 und eine Parksperreneinrichtung für ein Fahrzeug nach Anspruch 7.

Bevorzugte Weiterbildungen sind Gegenstand der Unteransprüche.

### Vorteile der Erfindung

Die der vorliegenden Erfindung zugrunde liegende Idee besteht darin, ein Verfahren zum Betreiben einer Parksperreneinrichtung in einem Fahrzeug sowie eine zugehörige Parksperreneinrichtung anzugeben, wobei bei bestimmten auftretenden Fehlerfällen im Fahrzeug eine Parksperre selbsttätig eingelegt werden kann und dabei eine Obergrenze für die Fahrzeuggeschwindigkeit berücksichtigt werden kann, bis zu welcher die Parksperre aktiviert werden kann. Erfindungsgemäß erfolgt bei dem Verfahren zum Betreiben einer Parksperreneinrichtung in einem Fahrzeug ein Erkennen einer vorliegenden Fehlersituation in einer Steuerung des Fahrzeugs; ein Ermitteln einer Geschwindigkeit des Fahrzeugs bei der erkannten Fehlersituation; ein Abgleichen der Geschwindigkeit des Fahrzeugs mit einem vorbestimmten Geschwindigkeitsgrenzwert; und ein Aktivieren einer Sperrwirkung einer Parksperre der Parksperreneinrichtung auf zumindest ein Antriebsrad des Fahrzeugs, wenn die Geschwindigkeit des Fahrzeugs kleiner oder gleich dem vorbestimmten Geschwindigkeitsgrenzwert ist.

Die Betätigung des Sperrmechanismus kann automatisiert (,by-wire') erfolgen, so dass elektronische Stellbefehle eine Aktuatorik veranlassen den Sperrmechanismus zu betätigen. Die elektronischen Stellbefehle können dabei von einer Steuereinrichtung koordiniert und an eine Parksperrensteuerung übertragen werden, die entweder in einer Triebstrangsteuerung/E-MaschinenSteuerung (Inverter) integriert ist oder aber auch als separate Steuerung realisiert sein kann.

Es kann bei einer Fehlersituation, wie z.B. bei Verlust der Kommunikation zwischen der Parksperrensteuerung und einer Fahrzeugsteuerung/Triebstrangsteuerung, die Parksperrensteuerung die Sperre eigenständig einlegen (,normally locked'-Verhalten).

Tritt die Fehlersituation bei hoher Fahrzeuggeschwindigkeit auf, dann kann in bekannten Systemen der Einlegemechanismus sofort aktiviert werden, was eine mechanische Abweisfunktion, welche das Einrasten der Parksperre (Herstellung des Formschlusses) bei hohen Drehzahlen verhindern kann, stark belasten kann.

Die Fehlersituation kann unterschiedliche Arten von Steuerkommunikationen im Fahrzeug betreffen, etwa eine Kommunikation zwischen der Parksperrensteuerung zur Betätigung der Parksperre und der Fahrzeugsteuerung und/oder der Triebstrangsteuerung.

Mit dem Ermitteln der Geschwindigkeit kann allgemein eine Geschwindigkeit des Fahrzeugs durch einen Sensor gemessen werden und/oder über Kenntnis der Drehzahlen der Maschine, durch Übersetzungsverhältnisse und durch eine bekannte Dimension der Räder aus der Drehzahl oder der Getriebewellendrehzahl auf die tatsächliche Geschwindigkeit des Fahrzeugs rückgeschlossen werden, falls eine Traktion der Räder besteht und kein Schlupf vorhanden ist. Die Geschwindigkeit des Fahrzeugs kann dann während dem die Fehlersituation als vorliegend erkannt worden ist, und auch davor oder danach, ermittelt werden.

Der vorbestimmte Geschwindigkeitsgrenzwert kann je nach Fahrzeugtyp, Getriebetyp, Triebstrangkomponenten oder auch anderer Parameter bestimmt werden, etwa bis zu welcher Geschwindigkeit das Getriebe oder auch weitere Komponenten ein Einsetzen der Sperrwirkung der Parksperre verkraften können. Dabei wird angestrebt, dass keine Sperrwirkung, oder keine nennenswerte Sperrwirkung, ausgeübt wird, während sich die ermittelte Geschwindigkeit oberhalb des Geschwindigkeitsgrenzwerts befindet.

Gemäß einer bevorzugten Ausführungsform des Verfahrens handelt es sich bei der Fehlersituation um einen Ausfall einer Kommunikation zwischen einer Steuereinrichtung des Fahrzeugs und zumindest einer Antriebs- und/oder Bremskomponente des Fahrzeugs.

Die Steuereinrichtung kann dabei ein Steuergerät für die Bremskomponenten, die Maschine oder Ähnliches umfassen. So kann in entsprechenden Fehlerfällen die Sperrwirkung der Parksperre selbsttätig eingelegt werden, etwa ohne Aktivierungsbefehl durch eine Fahrzeugsteuerung, wobei dies vorteilhaft nur dann erfolgt, wenn die ermittelte Geschwindigkeit des Fahrzeugs sich in einem Bereich befindet, welcher sowohl für die Sperrmechanik als auch für die Fahrstabilität vorzugsweise unkritisch ist, also durch das Einsetzen der Sperrwirkung, etwa der Blockade der Räder, kein nennenswerter Schaden an der Sperrmechanik entsteht. Die Sperrwirkung kann dabei erst aktiviert werden, wenn die Geschwindigkeit des Fahrzeugs unter den Geschwindigkeitsgrenzwert sinkt. So kann ein Aktivieren der Parksperre bei zu hohen Geschwindigkeiten vorteilhaft vermieden werden.

Gemäß einer bevorzugten Ausführungsform des Verfahrens handelt es sich bei der Fehlersituation um einen Strom- oder Spannungsausfall in einer Steuereinrichtung des Fahrzeugs und/oder in einer Antriebs- und/oder Bremskomponente des Fahrzeugs.

Gemäß einer bevorzugten Ausführungsform des Verfahrens wird die Sperrwirkung der Parksperreneinrichtung automatisch durch eine Aktorik und diese durch eine Steuereinrichtung der Parksperreneinrichtung aktiviert.

Erfindungsgemäß werden Motordrehzahlen eines Motors des Fahrzeugs und/oder Getriebewellendrehzahlen eines Getriebes des Fahrzeugs ermittelt und die Geschwindigkeit des Fahrzeugs basierend auf den ermittelten Motordrehzahlen und/oder basierend auf den ermittelten Getriebewellendrehzahlen über einen bestimmten Zeitraum berechnet.

Die Ermittlung der Geschwindigkeit kann vorteilhaft auch noch bei auftretender Fehlersituation erfolgen, wobei die Ermittlung der Geschwindigkeit auf Basis einer in der Fehlersituation noch zur Verfügung stehenden oder ermittelbaren Information oder Messung von Motordrehzahlen und/oder Getriebewellendrehzahlen erfolgen kann. So kann beispielsweise eine PLS-Steuerung (Park Lock System), etwa bestehend aus mehreren Komponenten, ein ermitteltes Drehzahlsignal einlesen und auswerten.

Der bestimmte Zeitraum kann vorteilhaft jenem Zeitraum entsprechen, über welchen die Fehlersituation anhält.

Des Weiteren wird erfindungsgemäß basierend auf den Motordrehzahlen und/oder den Getriebedrehzahlen ermittelt, ob an zumindest einem Antriebsrad des Fahrzeugs eine Schlupfbewegung gegenüber einem Untergrund vorliegt und daraus die Geschwindigkeit des Fahrzeugs unter Berücksichtigung eines Vorliegens der Schlupfbewegung berechnet.

Eine genauere Ermittlung der Geschwindigkeit des Fahrzeuges kann vorteilhaft ein Auftreten einer Abweichung von der idealen Radtraktion mit dem Untergrund berücksichtigen, wobei die ermittelten Drehzahlen nicht allein über die Übersetzungsverhältnisse und Radgrößen zu der tatsächlichen Geschwindigkeit des Fahrzeuges führen können. Es kann beispielsweise bei einer auftretenden Fehlersituation ein starkes Abbremsen durch den Fahrer eingeleitet werden, während dessen zumindest eines der Räder des Fahrzeuges für eine bestimmte Zeit blockieren kann oder die Traktion verlieren kann.

Gemäß einer bevorzugten Ausführungsform des Verfahrens wird ermittelt, ob sich die Motordrehzahlen und/oder die Getriebedrehzahlen und/oder deren Gradienten innerhalb eines für eine Traktion mit dem Untergrund zu erwartenden Wertebereichs befinden und der Radschlupf erkannt wird, wenn sich die Motordrehzahlen und/oder die Getriebedrehzahlen und/oder deren Gradienten außerhalb des für eine Traktion mit dem Untergrund zu erwartenden Wertebereichs befinden.

Für solche Fälle kann vorteilhaft ein Modell zur Ermittlung der tatsächlichen Geschwindigkeit angewandt werden und etwa durch eine Auswerteeinrichtung oder eine Steuereinrichtung der Parksperreneinrichtung durchgeführt werden. Ein solches Modell kann vorteilhaft auf einen kurzzeitig auftretenden Radschlupf robust sein. Dies kann vorteilhaft dadurch erreicht werden, dass eine Bewertung der Drehzahlinformationen in einem Bezug auf physikalisch zu erwartende Drehzahlverläufe von Antriebsrädern unter Fahrbahnhaftung erfolgen kann. So können mit anderen Worten ein zu erwartender Bereich für die Drehzahlenwerte für das entsprechende Fahrzeug vorbestimmt sein, unter welchen die Antriebsräder mit hoher Wahrscheinlichkeit noch Bodenhaftung und Traktion aufweisen und ab welchen Drehzahlen oder Drehzahlgradienten keine Traktion mehr für diese Fahrzeugdaten (Gewicht, Größe, usw.) angenommen werden kann.

In Betriebsphasen, in welchen sich die ermittelten Drehzahlen, etwa durch entsprechende Sensoren im Fahrzeug, in dem zu erwartenden Wertebereich bewegen, kann etwa durch bekannte Übersetzungsverhältnisse und Radabmessungen auf die tatsächliche Geschwindigkeit geschlossen werden, etwa nachdem das Drehzahlsignal gefiltert worden ist (beispielsweise mit gängigen Filtermethoden). Für Drehzahlen im erwarteten Wertebereich kann vorteilhaft für das Modell davon ausgegangen werden, dass höchstwahrscheinlich laterale Haftreibung zur Fahrbahn besteht. Außerhalb des zu erwartenden Wertebereichs kann zumindest ein Rad als schlupfend angenommen werden.

Erfindungsgemäß erfolgt das Ermitteln der Motordrehzahlen und/oder der Getriebedrehzahlen wiederholt und deren Abgleich erfolgt mit dem zu erwartenden Wertebereich und daraus das Ermitteln der Geschwindigkeit des Fahrzeugs jeweils wiederholt nacheinander.

Gemäß einer bevorzugten Ausführungsform des Verfahrens erfolgt das Ermitteln der besagten Gradienten wiederholt und deren Abgleich erfolgt mit dem zu erwartenden Wertebereich und daraus das Ermitteln der Geschwindigkeit des Fahrzeugs jeweils wiederholt nacheinander.

Erfindungsgemäß umfasst die Parksperreneinrichtung für ein Fahrzeug eine Parksperre, mittels welcher eine Sperrwirkung auf zumindest ein Antriebsrad des Fahrzeugs erzeugbar ist; und eine Steuereinrichtung, welche dazu eingerichtet ist, ein Vorliegen einer Fehlersituation in einer Steuerung des Fahrzeugs zu ermitteln und eine Geschwindigkeit des Fahrzeugs bei der erkannten Fehlersituation zu ermitteln; die ermittelte Geschwindigkeit des Fahrzeugs mit einem vorbestimmten Geschwindigkeitsgrenzwert abzugleichen; und die Sperrwirkung auf zumindest ein Antriebsrad des Fahrzeugs zu aktivieren, wenn die ermittelte Geschwindigkeit des Fahrzeugs kleiner oder gleich dem vorbestimmten Geschwindigkeitsgrenzwert ist.

Gemäß einer bevorzugten Ausführungsform der Parksperreneinrichtung umfasst diese eine Sensoreinrichtung, welche dazu eingerichtet ist, Motordrehzahlen eines Motors des Fahrzeugs und/oder Getriebedrehzahlen eines Getriebes des Fahrzeugs und/oder deren Gradienten zu ermitteln.

Gemäß einer bevorzugten Ausführungsform der Parksperreneinrichtung umfasst diese eine automatische Aktorik mittels welcher eine Sperrwirkung der Parksperre aktivierbar ist.

Die Aktorik kann bei Erkennen der vorhandenen Fehlersituation vorteilhaft automatisch gesteuert werden und die Sperrwirkung aktivieren, wenn die Geschwindigkeit des Fahrzeugs kleiner oder gleich dem vorbestimmten Geschwindigkeitsgrenzwert, beispielsweise 70 km/h, ist.

Die Parksperreneinrichtung kann sich auch durch die in Verbindung mit dem Verfahren genannten Merkmale und deren Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
- Fig. 1: eine schematische Darstellung einer Parksperreneinrichtung in einem Fahrzeug gemäß einem Ausführungsbeispiel der vorliegenden Erfindung;
- Fig. 2: eine schematische Darstellung einer Ermittlung einer Geschwindigkeit des Fahrzeugs bei einem Verfahren zum Betreiben einer Parksperreneinrichtung in einem Fahrzeug gemäß einem Ausführungsbeispiel der vorliegenden Erfindung; und
- Fig. 3: eine Blockdarstellung von Verfahrensschritten eines Verfahrens zum Betreiben einer Parksperreneinrichtung in einem Fahrzeug gemäß einem Ausführungsbeispiel der vorliegenden Erfindung.

In den Figuren bezeichnen gleiche Bezugszeichen gleiche bzw. funktionsgleiche Elemente.

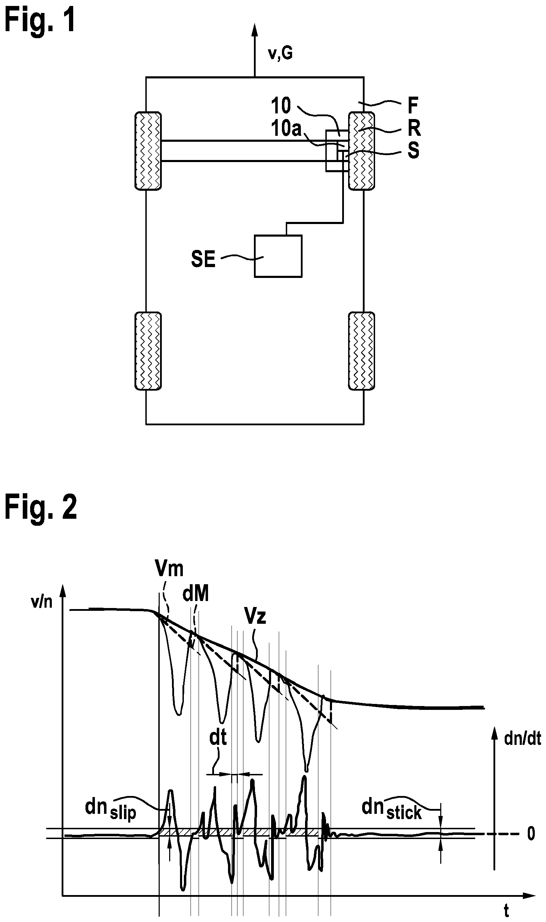

Fig. 1 zeigt eine schematische Darstellung einer Parksperreneinrichtung in einem Fahrzeug gemäß einem Ausführungsbeispiel der vorliegenden Erfindung.

Die Parksperreneinrichtung 10 in einem Fahrzeug F umfasst eine Parksperre 10a, mittels welcher eine Sperrwirkung auf zumindest ein Antriebsrad R des Fahrzeugs F erzeugbar ist; eine Steuereinrichtung SE, welche dazu eingerichtet ist, ein Vorliegen einer Fehlersituation in einer Steuerung des Fahrzeugs F zu ermitteln und eine Geschwindigkeit v des Fahrzeugs F bei der erkannten Fehlersituation zu ermitteln; die ermittelte Geschwindigkeit des Fahrzeugs F mit einem vorbestimmten Geschwindigkeitsgrenzwert G abzugleichen; und die Sperrwirkung auf zumindest ein Antriebsrad des Fahrzeugs F zu aktivieren, wenn die ermittelte Geschwindigkeit des Fahrzeugs F kleiner oder gleich dem vorbestimmten Geschwindigkeitsgrenzwert G ist.

Die Parksperreneinrichtung 10 kann eine Sensoreinrichtung S umfassen, welche dazu eingerichtet ist, Motordrehzahlen eines Motors des Fahrzeugs F und/oder Getriebedrehzahlen eines Getriebes des Fahrzeugs und/oder deren Gradienten zu ermitteln.

Die Parksperreneinrichtung 10 kann weiterhin eine automatische Aktorik umfassen, mittels welcher eine Sperrwirkung der Parksperre 10a aktivierbar ist.

Fig. 2 zeigt eine schematische Darstellung einer Ermittlung einer Geschwindigkeit des Fahrzeugs bei einem Verfahren zum Betreiben einer Parksperreneinrichtung in einem Fahrzeug gemäß einem Ausführungsbeispiel der vorliegenden Erfindung.

Dargestellt sind in der Fig. 2 die Abhängigkeit der ermittelten Drehzahlen n (Motordrehzahlen oder Getriebedrehzahlen) von der Zeit t sowie die Abhängigkeit der Geschwindigkeit v von der Zeit t, wobei sowohl die nach dem Model zu ermittelnde und modellierte Geschwindigkeit Vm wie auch die tatsächliche Geschwindigkeit Vz gezeigt werden können. Die Fig. 2 zeigt eine beispielhafte Abfolge von nacheinander erfolgenden Bremseingriffen, etwa eine Bremssequenz einer ABS-Bremsung. Dabei können beispielweise vier Bremseingriffe erfolgen und zwischen diesen kann die Bremswirkung kurzzeitig deaktiviert sein, etwa um ein Blockieren der Ränder zu lösen. Die dargestellten Werte der Geschwindigkeit und der Drehzahlen werden so skaliert, dass diese im ungebremsten Fall in der Fig. 2 wertgleich übereinander gelegt sein können. Bei der Bremsung kann dann die Drehzahl n von der tatsächlichen zugehörigen Geschwindigkeit Vz abweichen. So kann die Drehzahl n in jedem Bremseingriff der ABS-Bremsung eine Wertabweichung (Minimum) aufweisen. Im unteren Bereich der Darstellung der Fig. 2 kann ein Drehzahlgradient dn dargestellt werden, welcher aus den Drehzahlen n der entsprechenden Bremseingriffe und dazwischen ermittelt werden kann. Wenn der Gradient dn dabei einen vorbestimmten Wertebereich dn_{stick} übersteigt, kann eine hohe Wahrscheinlichkeit angenommen werden, dass zumindest ein Rad einen Schlupf gegenüber dem Untergrund aufweist. Wenn der Wert des Drehzahlgradiente dn wieder fällt und sich innerhalb des vorbestimmten Wertebereichs dn_{stick} befindet, so wird vorzugsweise erst wieder von bestehender Traktion (also dass die Räder keinen Schlupf mit dem Untergrund mehr aufweisen) ausgegangen, wenn sich der Drehzahlgradienten dn für zumindest eine charakteristische Zeit dt wieder innerhalb des vorbestimmten Wertebereichs befindet. Der vorbestimmte Wertebereich für den Drehzahlgradient kann dabei einen physikalisch der Traktion entsprechenden Bereich dn_{stick} entsprechen, von welchen bei bekannter Fahrzeuggröße, etwa auch der Annahme von trockenem Untergrund, und möglicherweise auch noch weiterer Parameter, mit hoher Wahrscheinlichkeit davon ausgegangen werden kann, dass die Räder in Haftung mit dem Untergrund sind (kein Schlupf).

Bei dem Modell kann nun vorteilhaft, wenn der Drehzahlgradient dn den physikalisch zu erwartenden Traktionsbereich dn_{stick} verlässt, ein zeitlich veränderbarer (linearer) Grenzwertverlauf für die Drehzahlenwerte abgeleitet werden. Ausgehend vom letzten Drehzahlenwert oder Drehzahlengradientenwert, welcher noch innerhalb des physikalisch der Traktion entsprechenden Bereichs dn_{stick} liegt (oder einem entsprechenden Bereich für die Drehzahlwerte), kann der Grenzwertverlauf direkt anschließen und die Werte in den Außenbereich der Werte außerhalb der physikalisch der Traktion entsprechenden Bereichs extrapoliert werden. Wenn die Bremswirkung wieder aussetzt und die Haftung der Räder wieder angenommen werden kann, kann die ermittelte modellierte Geschwindigkeit wieder der tatsächlichen Geschwindigkeit des Fahrzeugs gleichgesetzt werden. Da die modellierte Geschwindigkeit nur außerhalb des Traktionsbereiches als Ersatzwert für die Geschwindigkeit verwendet wird, muss das Modell innerhalb des Traktionsbereiches mit der tatsächlichen Geschwindigkeit abgeglichen/gleichgesetzt werden. Das Gleichsetzen stellt ein notwendiges Resetieren des Modells dar, um den richtigen Startwert für die nächste Radschlupfphase zu generieren. Hierbei kann sich ein Sprung in der modellierten Geschwindigkeit aus dem Resetiervorgang des Modells zu dem Zeitpunkt ergeben, wenn wieder Traktion erkannt wird.

Sobald der Drehzahlverlauf den physikalisch erwartbaren Bereich dn_{stick} verlässt, so wird ausgehend vom letzten gültigen Drehzahlwert, bei dem der Verlauf noch innerhalb des erwarteten Bereiches lag, ein (zeitlicher) Grenzwertverlauf dM der Geschwindigkeit abgeleitet. Solange sich die gemessene Drehzahl außerhalb des Grenzwertverlaufes bewegt wird angenommen, dass zumindest eines der Antriebsräder schlupft und die modellierte Fahrzeuggeschwindigkeit Vm wird auf Basis des Grenzwertverlaufes dM berechnet. Sobald die gemessene Drehzahl wieder innerhalb des Grenzwertverlaufs dn_{stick} liegt und die gemessenen Drehzahlwerte zueinander innerhalb eines Streumaßes dnₛₗᵢₚ, dann wird angenommen, dass an den Antriebsrädern kein Schlupf mehr vorliegt. In diesem Fall wird Fahrzeuggeschwindigkeit wird auf Basis des gefilterten Drehzahlsignals berechnet.

Für den geplanten Einsatzzweck des Modells ist dabei unwesentlich ob sich die tatsächliche Fahrzeuggeschwindigkeit in der Radschlupfphase tatsächlich genau mit dem angenommenen Grenzwertverlauf deckt oder die tatsächliche Fahrzeuggeschwindigkeit Vz höher liegt, da es lediglich kurze Schlupfereignisse abdecken soll, wie sie bei ABS-Bremsungen oder unterbrochene Vollbremsungen auftreten. Lang andauernde Radschlupfphasen (> 2 Sek.) können fahrdynamisch differenziert betrachtet werden.

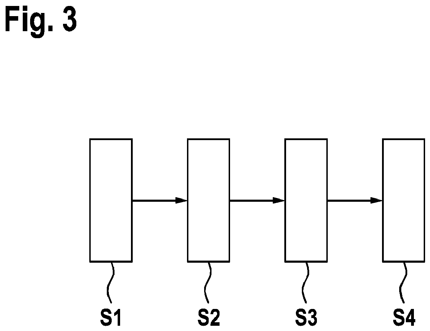

Fig. 3 zeigt eine Blockdarstellung von Verfahrensschritten eines Verfahrens zum Betreiben einer Parksperreneinrichtung in einem Fahrzeug gemäß einem Ausführungsbeispiel der vorliegenden Erfindung.

Bei dem Verfahren zum Betreiben einer Parksperreneinrichtung in einem Fahrzeug erfolgt ein Erkennen S1 einer vorliegenden Fehlersituation in einer Steuerung des Fahrzeugs; ein Ermitteln S2 einer Geschwindigkeit des Fahrzeugs bei der erkannten Fehlersituation; ein Abgleichen S3 der Geschwindigkeit des Fahrzeugs mit einem vorbestimmten Geschwindigkeitsgrenzwert; und ein Aktivieren S4 einer Sperrwirkung einer Parksperre der Parksperreneinrichtung auf zumindest ein Antriebsrad des Fahrzeugs, wenn die Geschwindigkeit des Fahrzeugs kleiner oder gleich dem vorbestimmten Geschwindigkeitsgrenzwert ist.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Verfahren zum Betreiben einer Parksperreneinrichtung (10) in einem Fahrzeug (F) umfassend die Schritte:
- Erkennen (S1) einer vorliegenden Fehlersituation in einer Steuerung des Fahrzeugs (F);
- Ermitteln (S2) einer Geschwindigkeit des Fahrzeugs (F) bei der erkannten Fehlersituation;
- Abgleichen (S3) der Geschwindigkeit des Fahrzeugs (F) mit einem vorbestimmten Geschwindigkeitsgrenzwert (G); und
- Aktivieren (S4) einer Sperrwirkung einer Parksperre (10a) der Parksperreneinrichtung (10) auf zumindest ein Antriebsrad des Fahrzeugs (F), wenn die Geschwindigkeit des Fahrzeugs (F) kleiner oder gleich dem vorbestimmten Geschwindigkeitsgrenzwert (G) ist, **dadurch gekennzeichnet, dass** Motordrehzahlen eines Motors des Fahrzeugs (F) und/oder Getriebewellendrehzahlen eines Getriebes des Fahrzeugs ermittelt werden und die Geschwindigkeit des Fahrzeugs (F) basierend auf den ermittelten Motordrehzahlen und/oder basierend auf den ermittelten Getriebewellendrehzahlen über einen bestimmten Zeitraum berechnet wird, und basierend auf den Motordrehzahlen und/oder den Getriebedrehzahlen ermittelt wird, ob an zumindest einem Antriebsrad des Fahrzeugs eine Schlupfbewegung gegenüber einem Untergrund vorliegt und daraus die Geschwindigkeit des Fahrzeugs (F) unter Berücksichtigung eines Vorliegens der Schlupfbewegung berechnet wird, wobei
das Ermitteln der Motordrehzahlen und/oder
der Getriebedrehzahlen wiederholt erfolgt und deren Abgleich mit einem für eine Traktion mit dem Untergrund zu erwartenden Wertebereich und daraus das Ermitteln der Geschwindigkeit des Fahrzeugs (F) jeweils wiederholt nacheinander erfolgt.

2. Verfahren nach Anspruch 1, bei welchem es sich bei der Fehlersituation um einen Ausfall einer Kommunikation zwischen einer Steuereinrichtung des Fahrzeugs und zumindest einer Antriebs- und/oder Bremskomponente des Fahrzeugs handelt.

3. Verfahren nach Anspruch 1 oder 2, bei welchem es sich bei der Fehlersituation um einen Strom- oder Spannungsausfall in einer Steuereinrichtung des Fahrzeugs (F) und/oder in einer Antriebs- und/oder Bremskomponente des Fahrzeugs handelt.

4. Verfahren nach einem der Ansprüche 1 bis 3, bei welchem die Sperrwirkung der Parksperreneinrichtung (10) automatisch durch eine Aktorik und diese durch eine Steuereinrichtung (SE) der Parksperreneinrichtung (10) aktiviert wird.

5. Verfahren nach einem der Ansprüche 1 bis 4, bei welchem ermittelt wird, ob sich die Motordrehzahlen und/oder die Getriebedrehzahlen und/oder deren Gradienten innerhalb eines für eine Traktion mit dem Untergrund zu erwartenden Wertebereichs befinden und die Schlupfbewegung erkannt wird, wenn sich die Motordrehzahlen und/oder die Getriebedrehzahlen und/oder deren Gradienten außerhalb des für eine Traktion mit dem Untergrund zu erwartenden Wertebereichs befinden.

6. Verfahren nach Anspruch 5, bei welchem das Ermitteln der besagten Gradienten wiederholt erfolgt und deren Abgleich mit dem zu erwartenden Wertebereich und daraus das Ermitteln der Geschwindigkeit des Fahrzeugs (F) jeweils wiederholt nacheinander erfolgt.

7. Parksperreneinrichtung (10) für ein Fahrzeug (F) umfassend:
- eine Parksperre (10a), mittels welcher eine Sperrwirkung auf zumindest ein Antriebsrad des Fahrzeugs (F) erzeugbar ist;
- eine Steuereinrichtung (SE), welche dazu eingerichtet ist,
ein Vorliegen einer Fehlersituation in einer Steuerung des Fahrzeugs (F) zu ermitteln und eine Geschwindigkeit des Fahrzeugs (F) bei der erkannten Fehlersituation zu ermitteln;
die ermittelte Geschwindigkeit des Fahrzeugs (F) mit einem vorbestimmten Geschwindigkeitsgrenzwert (G) abzugleichen; und
die Sperrwirkung auf zumindest ein Antriebsrad des Fahrzeugs (F) zu aktivieren, wenn die ermittelte Geschwindigkeit des Fahrzeugs (F) kleiner oder gleich dem vorbestimmten Geschwindigkeitsgrenzwert (G) ist, **dadurch gekennzeichnet, dass** die Parksperreneinrichtung so ausgestaltet ist, dass
durch die Parksperreneinrichtung (10) Motordrehzahlen eines Motors des Fahrzeugs (F) und/oder Getriebedrehzahlen eines Getriebes des Fahrzeugs ermittelbar sind und die Geschwindigkeit des Fahrzeugs (F) basierend auf den ermittelten Motordrehzahlen und/oder basierend auf den ermittelten Getriebedrehzahlen über einen bestimmten Zeitraum berechenbar ist, und basierend auf den Motordrehzahlen und/oder den Getriebedrehzahlen ermittelbar ist, ob an zumindest einem Antriebsrad des Fahrzeugs eine Schlupfbewegung gegenüber einem Untergrund vorliegt und daraus die Geschwindigkeit des Fahrzeugs (F) unter Berücksichtigung eines Vorliegens der Schlupfbewegung berechenbar ist, und das Ermitteln der Motordrehzahlen und/oder der Getriebedrehzahlen und deren Abgleich mit einem für eine Traktion mit dem Untergrund zu erwartenden Wertebereich und daraus das Ermitteln der Geschwindigkeit des Fahrzeugs (F) jeweils nacheinander wiederholbar ist.

8. Parksperreneinrichtung (10) nach Anspruch 7, welche eine Sensoreinrichtung (S) umfasst, welche dazu eingerichtet ist, Motordrehzahlen eines Motors des Fahrzeugs (F) und/oder Getriebedrehzahlen eines Getriebes des Fahrzeugs und/oder deren Gradienten zu ermitteln.

9. Parksperreneinrichtung (10) nach Anspruch 7 oder 8, welche eine automatische Aktorik umfasst, mittels welcher eine Sperrwirkung der Parksperre (10a) aktivierbar ist.

## Claims

1. Method for operating a parking lock device (10) in a vehicle (F), comprising the steps of:
- detecting (S1) that there is a fault situation in a controller of the vehicle (F);
- determining (S2) a speed of the vehicle (F) in the detected fault situation;
- comparing (S3) the speed of the vehicle (F) with a predetermined speed limit value (G); and
- activating (S4) a locking effect of a parking lock (10a) of the parking lock device (10) on at least one drive wheel of the vehicle (F) if the speed of the vehicle (F) is less than or equal to the predetermined speed limit value (G), **characterized in that** engine speeds of an engine of the vehicle (F) and/or transmission shaft speeds of a transmission of the vehicle are determined, and the speed of the vehicle (F) is calculated over a certain period of time on the basis of the determined engine speeds and/or on the basis of the determined transmission shaft speeds, and it is determined, on the basis of the engine speeds and/or the transmission speeds, whether there is a slipping movement with respect to the ground at at least one drive wheel of the vehicle, and the speed of the vehicle (F) is calculated therefrom taking into account a presence of the slipping movement, wherein the engine speeds and/or the transmission speeds are determined repeatedly and their comparison with a range of values expected for traction with the ground and the determination of the speed of the vehicle (F) therefrom are each repeatedly carried out in succession.

2. Method according to Claim 1, in which the fault situation is a failure in communication between a control device of the vehicle and at least one drive and/or brake component of the vehicle.

3. Method according to Claim 1 or 2, in which the fault situation is a current or voltage failure in a control device of the vehicle (F) and/or in a drive and/or brake component of the vehicle.

4. Method according to one of Claims 1 to 3, in which the locking effect of the parking lock device (10) is automatically activated by an actuator system and the latter is activated by a control device (SE) of the parking lock device (10).

5. Method according to one of Claims 1 to 4, in which it is determined whether the engine speeds and/or the transmission speeds and/or their gradients are within a range of values expected for traction with the ground, and the slipping movement is detected if the engine speeds and/or the transmission speeds and/or their gradients are outside the range of values expected for traction with the ground.

6. Method according to Claim 5, in which said gradients are determined repeatedly and their
comparison with the expected range of values and the determination of the speed of the vehicle (F) therefrom are each repeatedly carried out in succession.

7. Parking lock device (10) for a vehicle (F), comprising:
- a parking lock (10a) which can be used to produce a locking effect on at least one drive wheel of the vehicle (F) ;
- a control device (SE) which is configured to determine that there is a fault situation in a controller of the vehicle (F) and to determine a speed of the vehicle (F) in the detected fault situation;
to compare the determined speed of the vehicle (F) with a predetermined speed limit value (G); and
to activate the locking effect on at least one drive wheel of the vehicle (F) if the determined speed of the vehicle (F) is less than or equal to the predetermined speed limit value (G), **characterized in that** the parking lock device is configured in such a manner that
engine speeds of an engine of the vehicle (F) and/or transmission speeds of a transmission of the vehicle can be determined by means of the parking lock device (10), and the speed of the vehicle (F) can be calculated over a certain period of time on the basis of the determined engine speeds and/or on the basis of the determined transmission speeds, and it can be determined, on the basis of the engine speeds and/or the transmission speeds, whether there is a slipping movement with respect to the ground at at least one drive wheel of the vehicle, and the speed of the vehicle (F) can be calculated therefrom taking into account a presence of the slipping movement, and the determination of the engine speeds and/or the transmission speeds and their comparison with a range of values expected for traction with the ground and the determination of the speed of the vehicle (F) therefrom can each be repeated in succession.

8. Parking lock device (10) according to Claim 7, which comprises a sensor device (S) configured to determine engine speeds of an engine of the vehicle (F) and/or transmission speeds of a transmission of the vehicle and/or their gradients.

9. Parking lock device (10) according to Claim 7 or 8, which comprises an automatic actuator system that can be used to activate a locking effect of the parking lock (10a) .

## Revendications

1. Procédé pour faire fonctionner un dispositif (10) formant frein de stationnement dans un véhicule (F), comprenant les étapes suivantes :
- détection (S1) d'une situation d'erreur présente dans une commande du véhicule (F) ;
- détermination (S2) d'une vitesse du véhicule (F) dans la situation d'erreur détectée ;
- ajustement (S3) de la vitesse du véhicule (F) à une valeur limite de vitesse prédéterminée (G) ; et
- activation (S4) d'un effet de freinage d'un frein de stationnement (10a) du dispositif (10) formant frein de stationnement sur au moins une roue motrice du véhicule (F) lorsque la vitesse du véhicule (F) est inférieure ou égale à la valeur limite de vitesse prédéterminée (G), **caractérisé en ce que** des vitesses de rotation du moteur du véhicule (F) et/ou des vitesses de rotation de l'arbre de transmission d'une transmission du véhicule sont déterminées, et la vitesse du véhicule (F) est calculée sur la base des vitesses de rotation du moteur déterminées et/ou sur la base des vitesses de rotation de l'arbre de transmission déterminées sur une période de temps déterminée, et, sur la base des vitesses de rotation du moteur et/ou des vitesses de rotation de la transmission, on détermine s'il existe un mouvement de glissement par rapport à un sol sur au moins une roue motrice du véhicule et, à partir de là, la vitesse du véhicule (F) est calculée en tenant compte d'une présence du mouvement de glissement, la détermination des vitesses de rotation du moteur et/ou des vitesses de rotation de la transmission s'effectuant de manière répétée et leur comparaison avec une plage de valeurs attendue pour une traction par rapport au sol et, à partir de là, la détermination de la vitesse du véhicule (F) est effectuée de manière répétée et successive.

2. Procédé selon la revendication 1, dans lequel la situation d'erreur est une défaillance d'une communication entre un dispositif de commande du véhicule et au moins un organe d'entraînement et/ou de freinage du véhicule.

3. Procédé selon la revendication 1 ou la revendication 2, dans lequel la situation d'erreur est une panne de courant ou de tension dans un dispositif de commande du véhicule (F) et/ou dans un organe de propulsion et/ou de freinage du véhicule.

4. Procédé selon l'une des revendications 1 à 3, dans lequel l'effet de freinage du dispositif (10) formant frein de stationnement est activé automatiquement par un actionneur et celui-ci est activé par un dispositif de commande (SE) du dispositif (10) formant frein de stationnement.

5. Procédé selon l'une des revendications 1 à 4, dans lequel il est déterminé si les vitesses de rotation du moteur et/ou les vitesses de rotation de la transmission et/ou leurs gradients se trouvent à l'intérieur d'une plage de valeurs attendues pour une traction par rapport au sol et le mouvement de glissement est détecté lorsque les vitesses de rotation du moteur et/ou les vitesses de rotation de la transmission et/ou leurs gradients se trouvent en dehors de la plage de valeurs attendues pour une traction par rapport au sol.

6. Procédé selon la revendication 5, dans lequel la détermination desdits gradients est effectuée de manière répétée et leur comparaison avec la plage de valeurs attendues et, à partir de là, la détermination de la vitesse du véhicule (F) sont chacune effectuées de manière répétée et successive.

7. Dispositif (10) formant frein de stationnement pour un véhicule (F) comprenant :
- un frein de stationnement (10a), au moyen duquel un effet de freinage est apte à être produit sur au moins une roue motrice du véhicule (F) ;
- un dispositif de commande (SE), qui est conçu de façon à
déterminer la présence d'une situation d'erreur dans une commande du véhicule (F) et de déterminer une vitesse du véhicule (F) dans la situation d'erreur détectée ; ajuster la vitesse déterminée du véhicule (F) à une valeur limite de vitesse prédéterminée (G) ; et
activer l'effet de freinage sur au moins une roue motrice du véhicule (F) lorsque la vitesse déterminée du véhicule (F) est inférieure ou égale à la valeur limite de vitesse prédéterminée (G), **caractérisé en ce que** le dispositif formant frein de stationnement est conçu de telle sorte que
les vitesses de rotation du moteur du véhicule (F) et/ou les vitesses de rotation de la transmission du véhicule peuvent être déterminées par le dispositif (10) formant frein de stationnement, et la vitesse du véhicule (F) est apte à être calculée sur la base des vitesses de rotation du moteur déterminées et/ou sur la base des vitesses de rotation de la transmission déterminées pendant une période déterminée, et, sur la base des vitesses de rotation du moteur et/ou des vitesses de rotation de la transmission, il est possible de déterminer si un mouvement de glissement par rapport à un sol est présent sur au moins une roue motrice du véhicule et, à partir de là, il est possible de calculer la vitesse du véhicule (F) en tenant compte de la présence du mouvement de glissement, et la détermination des vitesses de rotation du moteur et/ou des vitesses de rotation de la transmission, et leur comparaison avec une plage de valeurs attendue pour une traction par rapport au sol, et, à partir de là, la détermination de la vitesse du véhicule (F), sont aptes à être effectuées de manière répétée et successive.

8. Dispositif (10) formant frein de stationnement selon la revendication 7, qui comprend un dispositif de détection (S) qui est conçu pour déterminer les vitesses de rotation d'un moteur du véhicule (F) et/ou les vitesses de rotation d'une transmission du véhicule et/ou leurs gradients.

9. Dispositif (10) formant frein de stationnement selon la revendication 7 ou la revendication 8, qui comprend un actionneur automatique au moyen duquel un effet de freinage du frein de stationnement (10a) est apte à être activé.
